# EUROPÄISCHE PATENTSCHRIFT

(11) **EP 2 005 037 B1**
(45) Veröffentlichungstag und Bekanntmachung des Hinweises auf die Patenterteilung: **24.03.2010**
(21) Anmeldenummer: 07727609.5
(22) Anmeldetag: 02.04.2007
(51) Int. Cl.: F16H 61/28, F16H 61/30, F15B 11/00

(54) **VERFAHREN UND VORRICHTUNG ZUR STEUERUNG EINES FLUIDBETÄTIGTEN STEUERSYSTEMS**
METHOD AND DEVICE FOR CONTROLLING A FLUID-ACTUATED CONTROL SYSTEM
PROCÉDÉ ET DISPOSITIF POUR COMMANDER UN SYSTÈME DE COMMANDE ACTIONNÉ PAR UN FLUIDE

(30) Priorität: 07.04.2006 DE 102006016412
(43) Veröffentlichungstag der Anmeldung: 24.12.2008
(73) Patentinhaber: ZF Friedrichshafen AG, 88038 Friedrichshafen (DE)
(72) Erfinder: INGENBLEEK, Robert, 88079 Kressbronn (DE); ULBRICHT, Markus, 88069 Tettnang (DE); STEINBORN, Mario, 88046 Friedrichshafen (DE); BRENTEL, Armin, 88045 Friedrichshafen (DE)
(86) Internationale Anmeldenummer: PCT/EP2007/053137
(87) Internationale Veröffentlichungsnummer: WO 2007/115958

(56) Entgegenhaltungen:
- EP-A- 1 232 901
- EP-A2- 0 997 671
- WO-A-2004/085885
- US-A1- 2004 200 683

## Beschreibung

Die Erfindung betrifft ein Verfahren und eine Vorrichtung zur Steuerung eines fluidbetätigten Steuersystems, insbesondere zur Bestätigung der Stellung von Stellgliedern, gemäß dem Oberbegriff des Patentanspruchs 1 sowie eine Vorrichtung zur Durchführung des Verfahrens gemäß dem Oberbegriff des Patentanspruchs 11. Ein entsprechendes Verfahren und eine entsprechende Vorrichtung sind aus dem Dokument EP 1 232 901 A2 bekannt.

An fluidbetätigte Steuersysteme, nachfolgend auch kurz als Fluidmittelsysteme bezeichnet, und besonders an derartige Steuersysteme für automatische oder automatisierte Getriebe in Kraftfahrzeugen, werden heutzutage hohe Ansprüche gestellt. Neben besonderen Anforderungen in Hinblick auf geringes Gewicht bei gleichzeitig hoher Zuverlässigkeit, Langlebigkeit, und Wartungsarmut sollen gerade bei Personenkraftwagen durch die Vorrichtungsbestandteile des Fluidmittelsystems bedingte Erschütterungen und Geräusche möglichst vermieden oder zumindest so weit wie möglich gedämpft werden. Zudem bestehen besondere Anforderungen an die Betätigungsgeschwindigkeit von anzusteuernden Stellgliedern, da beispielsweise eine durch einen Gangwechsel bedingte Zugkraftunterbrechung möglichst kurz andauern soll. Gleichzeitig soll das Fluidmittelsystem möglichst preisgünstig herzustellen und zu montieren sein und im Betrieb einen geringen Energiebedarf aufweisen.

So ist es bisher bei fluidbetätigten Getrieben üblich, im Anschluss an eine Steuerungsaktion, also an eine Veränderung der Stellung zumindest eines fluidbetätigten Stellgliedes, den Druck auf das oder die druckbeaufschlagten Stellglieder abzuschalten oder zumindest auf einen geringeren, für die Aufrechterhaltung der gewünschten Lage der druckbeaufschlagten Elemente ausreichenden Druck abzusenken. Dies ermöglicht eine Entlastung der Druckmittelleitungen und sonstiger druckbeaufschlagter Teile des Druckmittelsystems und der Stellglieder, und ermöglicht so eine Verringerung der Belastungen sowie dementsprechend ein schwächere und leichtere Auslegung und/oder eine höhere Standzeit des gesamten Fluidmittelsystems. Daneben bietet eine nur bei tatsächlich anstehenden Steuerungsaktionen erfolgende Beaufschlagung des Systems mit einem erhöhten Druck Vorteile in Hinblick auf die zur Erzeugung des Druckes und der zur Ansteuerung elektrisch betätigter Ventile benötigte Energie, sowie Vorteile in Hinblick auf eine Fluidverlustrate bei einer Leckage in diesen Systemteilen.

Während einer Steuerungsaktion werden auch bei dieser Steuerungsaktion nicht geschaltete bzw. bewegte Stellglieder während der gesamten Schaltdauer inklusive einer Nachschaltzeit zur Verhinderung bzw. Verminderung einer möglichen unerwünschten Lageverstellung durchgängig mit Druck beaufschlagt und auf diese Weise in ihrer Lage bestätigt sowie gegen eine mögliche unbeabsichtigte Verstellung aufgrund von kaum vermeidbaren lokalen und zeitlichen Druckschwankungen gesichert.

In dieser Schrift wird unter einer Steuerungsaktion sofern nicht ausdrücklich anders angegeben eine Aktion des fluidbetätigten Steuersystems verstanden, bei der die Position zumindest eines Stellgliedes aufgrund von Stellbefehlen der Steuerungsvorrichtung so verändert wird, das dies gewollte Auswirkungen auf das zu steuernde oder zu regelnde System zur Folge hat. Dabei ist unter der Position des Stellgliedes beispielsweise die Verschiebung eines verstellbaren Kolbens in einem Zylinder zu verstehen. Mehrere Aktionen, die gleichzeitig oder zumindest in enger zeitlicher Nähe stattfinden, werden dabei als eine Steuerungsaktion aufgefasst.

Demnach handelt es sich bei der Ansteuerung eines Stellzylinders einer Kolben-Zylinder-Anordnung, dessen Kolben beispielsweise mit einem Ausrückhebel einer Kupplung oder einer Verschiebeeinrichtung für eine Schaltklaue oder einem auf einer Welle verschiebbar gelagerten Zahnrad gekoppelt sein kann, um eine Steuerungsaktion, wenn dies beispielsweise eine gewollte Veränderung der Stellung der Kupplungsbeläge, ein Einkuppeln oder Auskuppeln der Klauenkupplung oder das in Eingriff bringen von zwei Zahnrädern zur Folge hat oder zumindest bezweckt. Sofern ein Schließen der Kupplung, ein Einkuppeln der Klauenkupplung oder eine Verschiebung des Zahnrades auf der Welle beispielsweise im Zuge eines Gangwechsels nahezu gleichzeitig geschieht, können diese Aktionen zu einer Steuerungsaktion "Gang X einlegen" zusammengefasst werden. Stellglieder, die entsprechend der vorstehenden Beschreibung betätigt werden, sind im Folgenden als geschaltete Stellglieder bezeichnet.

Daneben soll unter einer Steuerungsaktion jedoch auch derjenige Fall verstanden werden, bei dem eine Ansteuerung dieses Stellgliedes mit dem Ziel erfolgt, eines oder mehrere Stellglieder in ihrer Lage zu bestätigen. Unter einer Bestätigung eines Stellelementes wird eine Ansteuerung desselben mit dem Ziel verstanden, dessen Position unverändert beizubehalten bzw. es in seiner Position festzuhalten oder es gegebenenfalls um eine Strecke in Richtung auf eine zuvor eingenommene oder angestrebte Position zu verschieben, die deutlich geringer ist, als die Strecke zwischen benachbarten Funktionsstellungen des Stellgliedes. Hierunter fallen beispielsweise Druckbeaufschlagungen von Stellgliedern, die einen um eine geringe Strecke zurück geprellten Kolben wieder an einem Anschlag zur Anlage bringen sollen.

Beispielsweise kann durch einen Sensor ermittelt werden, dass die Position eines verschiebbaren Stellglied-Kolbens z.B. aufgrund von Vibrationen oder äußeren Kräften aus seiner vorgesehenen Lage wegbewegt wird oder bewegt werden würde, sofern diesem nicht durch eine entsprechende Beaufschlagung durch unter Druck stehendem Arbeitsfluid entgegengewirkt wird. Stellglieder, die entsprechend der vorstehenden Beschreibung betätigt werden, sind im Folgenden als nicht geschaltete oder ungeschaltete Stellglieder bezeichnet.

Hinsichtlich eines Fluidmittelsystems mit mehreren Stellgliedern wurde es bisher teilweise als vorteilhaft beurteilt, bei einer durchzuführenden Steuerungsaktion z.B. mittels eines Hauptventils für eine standardisierte, aus einer Stellzeit und einer Nachschaltzeit bestehenden Zeitspanne einen vorbestimmten Druck auf das gesamte Drucksystem zu geben, wodurch bei zuvor oder gleichzeitig erfolgter Einstellung der den Stellgliedern zugeordneten Ventile das oder die geschalteten Stellglieder bzw. deren bewegliche Elemente in die gewünschte Position gebracht werden, während die ungeschalteten Stellglieder bzw. deren bewegliche Elemente durch die Druckbeaufschlagung in ihrer Position festgehalten werden.

Oft sind die Stellglieder jedoch auch über in deren Nähe verbaute Steuerventile an eine im Betrieb ständig unter einem standardisierten Betriebsdruck stehende Druckmittelzuleitung sowie an eine unter geringerem Druck stehende Druckmittelableitung bzw. Drucklosleitung angeschlossen, so dass zur Betätigung eines Stellgliedes z.B. durch eine entsprechende Ansteuerung von Ventilen gezielt dieses Stellglied für einen standardisierte Zeitraum unter den Betriebsdruck gesetzt wird. In diesen Fällen werden jeweils auch die den nicht geschalteten Stellgliedern zugeordneten Ventile entsprechend betätigt, um diese Stellglieder in ihrer Lage zu bestätigen. Bei pneumatischen Systemen kann die Druckmittelableitung dabei selbstverständlich durch eine einfache Entlüftungsmöglichkeit in die Umwelt ersetzt sein.

Obwohl die beschriebene Druckbeaufschlagung auch von nicht geschalteten Stellgliedern grundsätzlich sinnvoll ist und einen wesentlichen Beitrag zur Funktionssicherheit des Systems liefert, so ist diese Vorgehensweise in der bisherigen Form doch mit den nachfolgend beschriebenen Nachteilen verbunden:

Durch die gleichzeitige oder zumindest nahezu gleichzeitige Beaufschlagung sämtlicher geschalteter und ungeschalteter Stellglieder mit unter Druck stehendem Fluid ist der kurzzeitig benötigte Fluidmittelstrom relativ groß. Dies gilt insbesondere bei pneumatischen Fluidsystemen, in geringerem Maße jedoch auch für hydraulische Fluidmittelsysteme.

Durch unterschiedliche Totzeiten von Ventilen und Stellgliedern sowie unterschiedliche Geometrien der verschiedenen Fluidleitungen kann es zwar zu einer geringfügigen zeitlichen Auffächerung der Beaufischiagungszeitpunkte kommen, diese ist jedoch sehr gering und als ein so genannter "Schmutzeffekt" kein Mittel zur gezielten Optimierung eines Fluidmittelsystems.

Als direkte Folge davon muss entweder ein relativ voluminöser und schwerer Vorratsbehälter für ein unter erhöhtem Druck stehendes Arbeitsfluid vorgehalten werden, oder die Druckmittelquelle muss in Form einer entsprechend stark ausgelegten Druckmittelpumpe eine entsprechend hohe Leistung bereitstellen. Beide Varianten führen zu einem erhöhten Gewicht und vergrößerten Kosten.

Selbst wenn beispielsweise aufgrund von Sicherheitserwägungen in Bezug auf eine Notlaufeigenschaft des Fluidmittelsystems für einen Ausfall der Druckmittelpumpe ein entsprechender Vorratsbehälter ohnehin vorgesehen ist, müssen die Druckmittelleitungen zu den einzelnen Stellgliedern und insbesondere die Druckmittel-Hauptleitungen zur Versorgung mehrerer Stellglieder so groß ausgelegt sein, dass diese dem benötigten großen Fluidmittelstrom nur einen vertretbar geringen Strömungswiderstand entgegenstellen. Dies vergrößert die notwendigen Querschnitte und führt zu Einschränkungen bezüglich der Verlegung der Druckmittelleitungen in z.B. einem Kraftfahrzeug mit begrenztem freiem Raum und vielfältigen Randbedingungen für die Verlegung dieser Leitungen.

Ein dem vorstehend geschilderten Problem des großen kurzzeitig benötigten Druckmittelstroms ähnliches Problem betrifft die elektrische Ansteuerung der den Stellgliedern zugeordneten Ventile. Da diese gleichzeitig in den jeweils gewünschten Stellungen betätigt sein sollen, folgt bei annähernd gleicher Totzeit der Ventile daraus auch eine gleichzeitige Ansteuerung derselben. Dies hat bei den üblicherweise verwendeten, elektrisch angesteuerten Ventilen eine erhebliche Leistungsspitze des elektrischen Verbrauchs zur Folge und kann andere Systeme empfindlich stören, wenn dem nicht durch aufwendige Maßnahmen entgegengewirkt wird. Weiter bedeutet eine zeitgleiche Bestromung der Ventile eine unnötig verlängerte Betriebsdauer zumindest einiger Ventile und damit einerseits eine Verschwendung von Energie und andererseits eine erhöhte Belastung der Ventile.

Durch die gleichzeitige Beaufschlagung sämtlicher Stellglieder mit unter Druck stehendem Fluid wird auch ein vergleichsweise großer Druckstoß im System erzeugt, der nicht nur sämtliche druckführende Elemente des Fluidmittelsystems stark belastet, sondern auch zu mechanischen Erschütterungen und/oder einer Anregung des Systems oder von Teilen davon zu Eigenschwingungen führen kann. Weiter können Geräuschemissionen entstehen, die gerade im Bereich von Kraftfahrzeugen und insbesondere bei Personenkraftwagen unerwünscht sind.

Vor diesem Hintergrund liegt der Erfindung die Aufgabe zugrunde, ein Steuerungsverfahren für ein Fluidmittelsystem, beispielsweise für ein automatisiertes oder automatisches Getriebe für ein Kraftfahrzeug vorzustellen, welches die vorstehend geschilderten Nachteile nicht oder zumindest in erheblich geringerem Maße aufweist. Insbesondere soll eine nur kurzzeitige und bedarfsorientierte Bestätigung von Schaltgliedern möglich sein.

Die Lösung dieser Aufgabe ergibt sich aus den Merkmalen der unabhängigen Patentansprüche, während vorteilhafte Ausgestaltungen und Weiterbildungen der Erfindung zugeordneten Unteransprüchen entnehmbar sind.

Der Erfindung liegt die Erkenntnis zugrunde, dass durch eine zeitlich abgestimmte, kurzzeitige und bedarfsorientierte Druckbeaufschlagung nicht geschalteter Stellglieder die vorstehend genannten Nachteile beseitigt oder zumindest stark verringert werden können.

Demnach geht die Erfindung aus von einem Verfahren zur Steuerung eines fluidbetätigten Steuersystems, beispielsweise zur Steuerung eines hydraulisch oder pneumatisch gesteuerten automatischen oder automatisierten Getriebes für ein Kraftfahrzeug. Das fluidbetätigte Steuersystem weist zumindest eine Druckquelle bzw. Druckmittelquelle und zumindest zwei mit unter Druck stehendem Fluid beaufschlagbare Stellglieder sowie eine Einrichtung zur Steuerung des fluidbetätigten Steuersystems auf.

Unter einem fluidbetätigten Steuersystem wird dabei ein hydraulisches oder pneumatisches System verstanden, welches mit Hilfe von z.B. durch eine Steuereinrichtung elektrisch ansteuerbaren Ventilen gezielt Stellglieder betätigen und in eine gewünschte Zielposition bringen bzw. dort halten kann.

Zur Lösung der gestellten Aufgabe ist vorgesehen, dass ein zusätzliches Steuerungsmodul Signale über zumindest die vorliegende Steuerungsaktion einliest und daraus gemäß vorgegebener Muster und/oder Berechnungsvorschriften und/oder Modelle Signale erzeugt, welche die Beaufschlagung von nicht geschalteten Stellgliedern mit unter Druck stehendem Arbeitsfluid veranlassen. Gemeint ist dabei selbstverständlich ein von einem Referenzdruck abweichender, zur Bestätigung der Stellelemente geeigneter Druck.

Hierbei ist der Trivialfall, dass das Steuerungsmodul mit einer herkömmlichen Steuerungseinrichtung des fluidbetätigten Steuersystems identisch ist und das Muster darin besteht, bei einer beliebigen Steuerungsaktion stets sämtliche oder zumindest die Mehrzahl der nicht geschalteten Stellglieder gleichzeitig mit den geschalteten Stellgliedern mit unter Druck stehendem Arbeitsfluid zu beaufschlagen, selbstverständlich explizit ausgeschlossen.

Das erfindungsgemäße Verfahren ermöglicht es gegenüber Verfahren gemäß dem Stand der Technik, beispielsweise im Fall eines hydraulisch gesteuerten Kfz-Getriebes die Gangwechselvorgänge oder deren Teilschritte als Steuerungsaktionen aufzufassen, und für jeden möglichen Gangwechsel neben den jeweils zu schaltenden Stellgliedern auch diejenigen ungeschalteten Stellglieder festzulegen, die sich im Zuge des Gangwechsels ungewollt in eine andere Position bewegen könnten. Stellglieder, für die diese Gefahr nicht besteht, werden in diesem Beispiel nicht mit Druck beaufschlagt und der Druckstoß sowie der maximal auftretende Volumenstrom und die zur Ansteuerung der Stellglieder notwendige elektrische Spitzenlast werden dementsprechend reduziert.

Neben diesem Ansteuerungsmuster nach Art einer Tabelle ist es weiter möglich, beispielsweise zusätzlich jedes nicht geschaltete Stellglied, das während der vorangegangenen z.B. zwei Steuerungsaktionen nicht mit Druck beaufschlagt wurde, mit Druck zu beaufschlagen, um ein langsames Wandern der Position des beweglichen Teils dieser Stellglieder auszuschließen.

In einer ersten bevorzugten Ausführungsform der Erfindung ist vorgesehen, dass das Steuerungsmodul Signale erzeugt, welche Informationen über zumindest das oder die mit Druck zu beaufschlagenden, nicht geschalteten Stellglieder und den Zeitpunkt von deren Beaufschlagung mit unter Druck stehendem Arbeitsfluid enthalten, oder diese Ansteuerung durch geeignete Signale direkt veranlasst.

Auf diese Weise können für nicht geschaltete Stellglieder, welche mit Druck beaufschlagt werden sollen, die Zeitpunkte des Beginns der Beaufschlagung unterschiedlich gewählt werden, und so durch eine geschickte Wahl der Zeitpunkte der maximal benötigte Volumenstrom im System erheblich reduziert und zudem verstetigt werden. Ähnliches gilt auch für die durch die anzusteuernden Ventile abgeforderte elektrische Spitzenleistung, da die Einschaltspitzen zeitlich verteilt werden können. Auch ist es möglich, die Zeitpunkte des Beginns der Druckbeaufschlagung über einen längeren Zeitraum zu verteilen und so bei z.B. standardisierter Zeitdauer der Druckbeaufschlagung die einzelnen Stellglieder zumindest teilweise zeitlich nacheinander zu beaufschlagen.

Es macht natürlich in Bezug auf den Erfindungsgedanken keinen Unterschied, ob das Steuerungsmodul die entsprechenden Signale direkt bzw. mit gegebenenfalls zwischengeschalteter Signalverstärkung an die Ventile der Stellglieder abgibt, oder beispielsweise eine Nachricht mit den entsprechenden Daten z.B. mittels eines Protokolls an beispielsweise die Steuerungsvorrichtung sendet, die diese Daten dann entsprechend berücksichtigt ihrerseits die Ansteuerung der Ventile übernimmt oder veranlasst.

Eine zweite bevorzugte Ausführungsform der Erfindung besteht darin, dass das Steuerungsmodul Signale erzeugt, welche Informationen über zumindest das oder die mit Druck zu beaufschlagenden, nicht geschalteten Stellglieder und die Zeitdauer von deren Beaufschlagung mit unter Druck stehendem Arbeitsfluid enthalten, oder diese Ansteuerung durch geeignete Signale direkt veranlasst.

Durch die Möglichkeit, die zeitliche Dauer der Druckbeaufschlagung zu bestimmen, wird einerseits die Minimierung der Zeitdauer der Druckbeaufschlagung von nicht geschalteten Stellgliedern etwa nach Bauart oder Funktion durchführbar, andererseits wird eine weitere Staffelung und zielgerichtete zeitliche Verteilung der Druckbeaufschlagung der nicht geschalteten Stellglieder möglich. Dabei ist eine Vorgabe eines Startzeitpunktes und eines Endzeitpunktes einer Druckbeaufschlagung selbstverständlich die Vorgabe einer zeitlichen Dauer.

Vorstehend gemeint ist dabei selbstverständlich eine Vorgabe unterschiedlicher Zeiträume für unterschiedliche Stellglieder und/oder unterschiedliche Steuerungsaktionen und/oder aufgrund weiterer Parameter. Der Trivialfall einer Vorgabe der stets gleichen Dauer für alle Stellglieder wird ausdrücklich nicht beansprucht.

Wenn gemäß einer Weiterbildung des erfindungsgemäßen Verfahrens das Steuerungsmodul zusätzlich weitere Informationen aus steuerungsmodulexternen oder steuerungsmodul-internen Quellen einliest und bei der Ermittlung der mit Druck zu beaufschlagenden nicht geschalteten Stellglieder und/oder dem Zeitpunkt und/oder der Zeitdauer ihrer Druckbeaufschlagung berücksichtigt, ergeben sich weitere vorteilhafte Möglichkeiten.

So kann beispielsweise in Abhängigkeit von in der Vergangenheit aufgetretenen Fehlerzuständen für ein Stellglied, welches z.B. aufgrund von Alterung zum ungewollten Verstellen der Position seines beweglichen Teils neigt, die Frequenz der Druckbeaufschlagung erhöht werden oder die Temperatur des Arbeitsfluids und damit die Leichtgängigkeit der Stellglieder mit berücksichtigt werden. Weitere, besonders nutzbringend zu berücksichtigende Informationen und die sich jeweils daraus ergebenden Möglichkeiten werden im Folgenden kurz vorgestellt.

Wenn das Steuerungsmodul gemäß einer ersten Variante zusätzlich eine Information über die Priorität der Bestätigung bzw. Beibehaltung der Stellung eines Stellgliedes einliest und bei der Ermittlung der mit Druck zu beaufschlagenden nicht geschalteten Stellglieder und/oder dem Zeitpunkt und/oder der Zeitdauer von deren Druckbeaufschlagung berücksichtigt, so ermöglicht dies eine vorrangige Druckbeaufschlagung solcher nicht geschalteter Stellglieder, deren Position im weiteren Verlauf der Steuerungsaktion besonders kritisch ist, da eine Fehlstellung z.B. zu einer Kollision verschiedener Bauteile im Getriebe führen kann.

Eine zweite Variante sieht vor, dass das Steuerungsmodul zusätzlich eine Information über die Verfügbarkeit von elektrischer Energie einliest und bei der Ermittlung der mit Druck zu beaufschlagenden nicht geschalteten Stellglieder und/oder dem Zeitpunkt und/oder der Zeitdauer von deren Druckbeaufschlagung berücksichtigt.

Hierdurch kann auf einen Spannungseinbruch beispielsweise im Falle einer temporären Netzüberlastung oder eines geringen Ladungsgrades einer Batterie entweder gezielt auf die Druckbeaufschlagung bestimmter nicht geschalteter Stellglieder verzichtet oder deren zeitliche Dauer verkürzt werden.

Sofern die Informationen, die das Steuerungsmodul zusätzlich einliest und bei der Ermittlung der mit Druck zu beaufschlagenden nicht gesteuerten Stellglieder und/oder dem Zeitpunkt und/oder der Zeitdauer von deren Beaufschlagung mit unter Druck stehendem Arbeitsfluid berücksichtigt, eine Information über die Verfügbarkeit von Druck und/oder Volumenstrom des Arbeitsfluids ist, so können auch in diesem Bereich auftretende oder sich abzeichnende Engpässe akut oder vorausschauend abgemildert oder zumindest berücksichtigt werden.

Wenn gemäß einer weiteren Variante das Steuerungsmodul zusätzlich eine Information über die IST-Position zumindest eines nicht gesteuerten Stellgliedes einliest und bei der Ermittlung der mit Druck zu beaufschlagenden Stellglieder und/oder dem Zeitpunkt und/oder der Zeitdauer von deren Druckbeaufschlagung berücksichtigt, so kann die Druckbeaufschlagung von nicht geschalteten Stellgliedern weiter optimiert werden.

Einerseits können aus einer eventuellen Abweichung zwischen der IST- und der SOLL-Position Rückschlüsse über beispielsweise die Wanderneigung des beweglichen Teils eines Stellgliedes gezogen werden, also auf dessen Neigung, unangesteuert seine Position zu verändern. Im diesem Fall kann beispielsweise die Frequenz, mit der dieses Stellglied im Falle seiner Nicht-Ansteuerung mit Druck beaufschlagt und so wieder in seine SOLL-Position gebracht wird, erhöht werden. Im Falle einer anhaltenden Abweichung zwischen der SOLL-Position und der ermittelten IST-Position kann die Druckbeaufschlagung beispielsweise verlängert werden, um die gewünschte Position sicher zu erreichen. Auch kann die Druckbeaufschlagung auf eine Minimalzeit verkürzt werden, indem sie bei Erreichen der Zielposition abgeschaltet wird.

Es ist auch möglich, eine Fehlermeldung zu erzeugen und auszugeben oder eine Druckbeaufschlagung eines nicht geschalteten Stellgliedes von vorneherein von dem Erreichen oder Überschreiten einer Differenz zwischen einer IST-Position und einer SOLL-Position abhängig zu machen. Letzteres Vorgehen ist besonders für die vorstehend bereits beschriebenen Fälle einer akuten Knappheit an elektrischer Energie, an Druck oder Druckmittelvolumenstrom sinnvoll.

Die Kenntnis der IST-Position des beweglichen Teils eines Stellgliedes ist jedoch nicht nur in Bezug auf eine bekannte SOLL-Position sinnvoll, sondern kann darüber hinaus auch zur Ermittlung einer Stellgeschwindigkeit geschalteter Stellglieder oder einer Wandergeschwindigkeit oder Vibration von nicht geschalteten Stellgliedern verwendet werden.

Eine Weiterbildung dieser Variante sieht vor, dass das Steuerungsmodul beim Vorliegen einer Information über eine Abweichung einer IST-Position von einer SOLL-Position des beweglichen Teils eines Stellgliedes eine Steuerungsaktion auslöst. So kann beispielsweise bei einer durch den Vergleich der IST-Position mit der SOLL-Position festgestellten Positionsabweichung eines Stellgliedes die durch das Steuerungsmodul ausgelöste Steuerungsaktion vorsehen, dass genau dieses Stellglied in seine Solllage zurückgebracht wird. Sofern z.B. durch eine zeitliche Auswertung der Positionsdaten ein unerwünscht starkes Vibrieren des beweglichen Teils eines Stellgliedes festgestellt wird, so kann die Steuerungsaktion vorsehen, dass dieses Stellglied bis zu einer gewünschten Positionsveränderung dauerhaft mit Druck beaufschlagt und so sicher in seiner Soll-Lage fixiert wird.

Schließlich kann es von Vorteil sein, wenn das Steuerungsmodul Signale erzeugt, welche eine gepulste Beaufschlagung nicht geschalteter Stellglieder mit unter Druck stehendem Arbeitsfluid zur Folge haben, da hierdurch beispielsweise bei einem geringfügig verklemmten oder schwergängigen Kolben eines als Kolben-Zylinder-Anordnung ausgebildeten Stellgliedes die zur Klemmung führende Haftreibung einfacher überwunden werden kann.

Nachfolgend wird kurz auf eine Vorrichtung eingegangen, die zur Durchführung eines Verfahrens gemäß der Erfindung geeignet ist.

Diese Vorrichtung umfasst ein fluidbetätigtes Steuersystem, welches zumindest eine Druckmittelquelle zum Beaufschlagen eines Arbeitsfluids mit einem erhöhten Druck und zumindest zwei mit Hilfe des unter erhöhtem Druck stehenden Arbeitsfluids ansteuerbare Stellglieder aufweist. Weiter ist eine Steuerungsvorrichtung zur Ansteuerung von Ventilen zur Steuerung und/oder Regelung des Druckes in verschiedenen Teilen des fluidbetätigten Steuersystems vorgesehen.

Die Vorrichtung umfasst zur Durchführung des Verfahrens nach wenigstens einem der vorstehend beschriebenen Varianten und Weiterbildungen außerdem ein Steuerungsmodul, weiches so ausgelegt ist, dass es zumindest eine Information über eine vorliegende Steuerungsaktion einlesen kann und unter zusätzlicher Berücksichtigung von vorgegebenen Mustern und/oder Berechnungsvorschriften und/oder Modellen Signale zu erzeugen in der Lage ist, die eine Beaufschlagung von nicht geschalteten Stellgliedern mit unter Druck stehendem Arbeitsfluid zur Folge haben.

Unter einer vorliegenden Steuerungsaktion wird dabei eine entweder bereits eingeleitete Steuerungsaktion verstanden, die beispielsweise von dem Steuerungsmodul über Sensoren erkannt werden kann, oder eine in naher Zukunft bevorstehende bzw. geplante oder vorzubereitende Steuerungsaktion, über deren Vorliegen das Steuerungsmodul beispielsweise durch die Steuerungsvorrichtung oder auch Signale beispielsweise eines Gangwahlschalters benachrichtigt werden kann.

Die signaltechnische Verknüpfung zwischen der Steuerungsvorrichtung und dem Steuerungsmodul ist zunächst unerheblich. So kann beispielsweise die Steuerungsvorrichtung ein Signal über eine Daten- oder Steuerungsleitung über eine Steuerungsaktion an das Steuerungsmodul senden, welches die mit Druck zu beaufschlagenden nicht geschalteten Stellglieder und z.B. die Zeitpunkte sowie Zeiträume von deren Druckbeaufschlagung ermittelt, und diese Informationen zwecks weiterer Aufbereitung, Signalverstärkung und Ansteuerung der entsprechenden Ventile an die Steuerungsvorrichtung zurücksendet. Es ist jedoch genauso denkbar, dass das Steuerungsmodul die Ansteuerung der entsprechenden Ventile direkt oder über weitere Mittel veranlasst.

Das Steuerungsmodul kann in die Steuerungsvorrichtung baulich und softwarebezogen integriert sein, ein eigenständiges Gerät bilden oder ganz oder teilweise in andere Geräte oder Module integriert sein. Auch spielt es hier zunächst keine Rolle, ob z.B. Modelle, Berechnungsvorschriften oder sonstige Muster, die beispielsweise auch auf Fuzzy-Logik oder selbstlernenden Mustererkennungsverfahren beruhen können, innerhalb des Steuerungsmoduls abgelegt sind oder von außen eingelesen werden. Schließlich ist es selbstverständlich, dass an dem Steuerungsmodul weitere Ein- und Ausgänge für z.B. die Versorgung mit elektrischer Energie, Sensorsignale, Fehlermeldungen und weitere Informationen vorhanden sein können. Sinnvoll ist hier eine busfähige Ausgestaltung der signaltechnischen Ein- und Ausgangsbereiche.

Das fluidbetätigte Steuersystem kann beispielsweise als ein Hydrauliksystem ausgebildet sein, welches aufgrund der Inkompressibilität des hydraulischen Arbeitsfluids vor allem in Bezug auf eine Vermeidung von sich überlagernden Druckstößen vorteilhaft ist. Alternativ dazu kann das fluidbetätigte Steuersystem als ein pneumatisches System ausgebildet sein, welches aufgrund der Kompressibilität des Arbeitsmediums insbesondere in Hinblick auf eine Vermeidung von Resonanzschwingungen vorteilhaft sein kann.

Die Erfindung lässt sich anhand eines Ausführungsbeispiels weiter erläutern. Dazu ist der Beschreibung eine Zeichnung beigefügt. In dieser ist ein erfindungsgemäßes, fluidbetätigtes Steuersystem dargestellt, welches aus einer Druckmittelquelle 1, die hier als hydraulische Druckmittelpumpe ausgebildet ist, aus zwei Stellgliedern 2 und 3 sowie aus jeweils die Druckzuleitung bzw. Druckableitung von bzw. zu der Druckmittelquelle 1 kontrollierenden Ventilen V1 bis V8 besteht, die durch ein Steuerungsmodul 4 elektrisch angesteuert werden. Dieses Steuerungsmodul 4 erhält Informationen über Steuerungsaktionen samt zugehöriger Steuerdaten für die zu betätigenden Stellglieder 2 und 3 von einer herkömmlichen Steuerungseinrichtung 5.

Die Stellglieder 2 und 3 sind jeweils als Kolben-Zylinder-Anordnungen ausgebildet und weisen jeweils einen beweglichen Kolben 7 bzw. 8 auf, der zwischen zylinderseitigen Anschlägen A1 und A2 bzw. A3 und A4 verschiebbar ist. Die beweglichen Kolben 7 und 8 sind über Kolbenstangen 9 bzw. 10 und jeweils eine Umlenkeinrichtung 11 bzw. 12 mit Elementen eines automatisierten Getriebes 15 verbunden, welche bei einer Betätigung einen Wechsel des Übersetzungsverhältnisses zwischen einer Eingangswelle 13 und einer Abtriebswelle 14 des Getriebes 15 zur Folge hat.

Während die Steuerdaten für die anzusteuernden Ventile eines gesteuerten Stellgliedes durch das Steuerungsmodul 4 allenfalls noch in Einzelsignale aufgetrennt und zur Ausgabe an die anzusteuernden Ventile V1 bis V8 verstärkt werden, also das Steuerungsmodul 4 im Wesentlichen nur passieren, ermittelt dieses aufgrund der von der Steuerungseinrichtung 5 erhaltenen Informationen und weiterer Daten oder Signale 6 von elektronischen Geräten und/oder Sensoren sowie mit Hilfe von Berechnungsvorschriften, Modellen oder im einfachsten Fall einer Tabelle für die nicht geschalteten Stellglieder 2 oder 3, ob und gegebenenfalls wann sowie wie lange diese durch eine entsprechende Ansteuerung der zugeordneten Ventile V1-V8 in einer Betätigungsrichtung bestätigt werden sollen.

Es sei angenommen, dass die Steuerungseinrichtung 5 aufgrund ihr vorliegender Daten einen Wechsel des Übersetzungsverhältnisses zwischen der Eingangswelle 13 und der Abtriebswelle 14 eines automatisierten Getriebes 15 auslöst, wofür das Stellglied 2 in der Art gesteuert werden soll, dass sein verstellbarer Kolben 7 von der gezeigten Ausgangsposition mit Anlage an einen Anschlag A2 in eine Zielposition mit Anlage an den Anschlag A1 überführt werden soll.

Die Steuerungseinrichtung 5 stellt diese Daten für die anstehende Steuerungsaktion zusammen und übermittelt diese an das Steuerungsmodul 4. Dieses erkennt die anstehende Steuerungsaktion und ermittelt, ob und gegebenenfalls welche nicht geschalteten Stellglieder, in diesem Fall Stellglied 3, in ihrer Lage bestätigt werden sollen. Es sei angenommen, dass der Kolben 8 des Stellgliedes 3 bei der vorliegenden Steuerungsaktion zu einer ungewollten Verschiebung neigt und daher für eine ausreichende Dauer durch eine entsprechende Druckbeaufschlagung in seiner Lage am Anschlag A4 bestätigt bzw. gehalten werden soll.

Das Steuerungsmodul 4 ermittelt nun mit Hilfe der in diesem Fall steuerungsmodulintern gespeicherten Berechnungsvorschriften und einer Tabelle die Zeitpunkte und Zeiträume für die Betätigung der Ventile V3, V4, V7 und V8 des in diesem Fall nicht geschalteten Stellgliedes 3 und steuert die Ventile V1 bis V8 gemäß den von der Steuerungseinrichtung 5 vorgegebenen sowie von dem Steuerungsmodul 4 ermittelten Daten an. Dadurch bleibt der Kolben 8 des Stellgliedes 3 sicher am Anschlag A4, während der Kolben 7 des Stellgliedes 2 vom Anschlag A2 zum Anschlag A1 verschoben wird.

### Bezugszeichen

- 1: Druckmittelquelle, Pumpe
- 2: erstes Stellglied
- 3: zweites Stellglied
- 4: Steuerungsmodul
- 5: herkömmliche Steuerungsvorrichtung
- 6: weitere Signale, Ein- bzw. Ausgänge des Steuerungsmoduls
- 7: Kolben des ersten Stellgliedes
- 8: Kolben des zweiten Stellgliedes
- 9: Kolbenstange des ersten Stellgliedes
- 10: Kolbenstange des zweiten Stellgliedes
- 11: Umlenkeinrichtung der Kolbenstange des ersten Stellgliedes
- 12: Umlenkeinrichtung der Kolbenstange des zweiten Stellgliedes
- 13: Eingangswelle des automatisierten Getriebes
- 14: Abtriebswelle des automatisierten Getriebes
- 15: automatisiertes Getriebe

- V1-V8: Ventile
- A1-A4: Anschläge der verstellbaren Kolben der Stellglieder

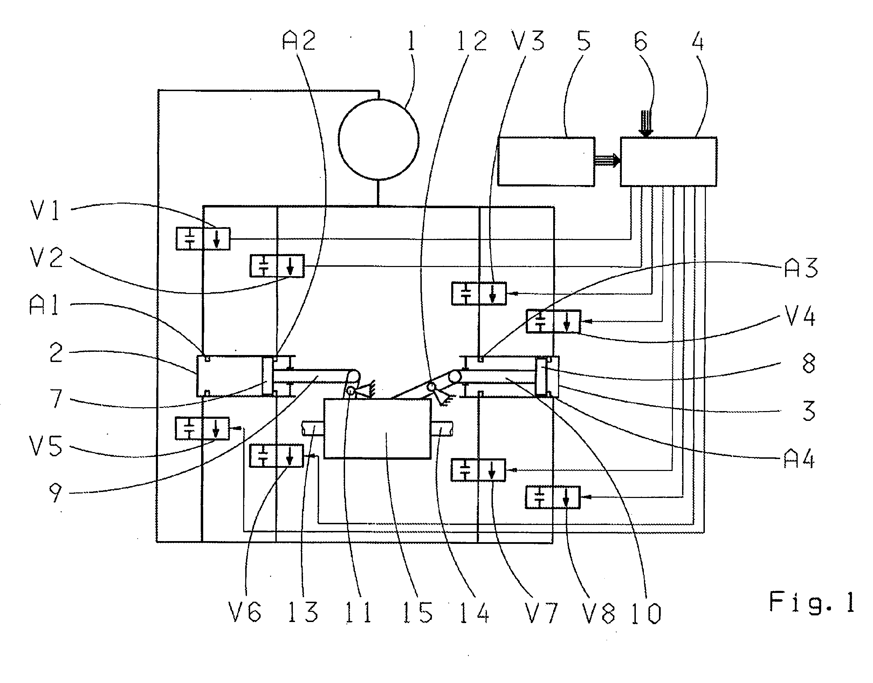

## Patentansprüche

1. Verfahren zur Steuerung eines fluidbetätigten Steuersystems, beispielsweise zur Steuerung eines hydraulisch oder pneumatisch gesteuerten automatischen oder automatisierten Getriebes (15) für ein Kraftfahrzeug, mit zumindest einer Druckmittelquelle (1), zumindest zwei mit unter Druck stehendem Fluid beaufschlagbaren Stellgliedern (2, 3) sowie mit einer Steuerungsvorrichtung (5) zur Steuerung des fluidbetätigten Steuersystems, **dadurch gekennzeichnet, dass** ein zusätzliches Steuerungsmodul (4) genutzt wird, welches Signale über zumindest eine vorliegende Steuerungsaktion einliest und daraus gemäß vorgegebener Muster und/oder Berechnungsvorschriften und/oder Modelle Signale erzeugt, welche die Beaufschlagung von nicht geschalteten Stellgliedern (2 oder 3) mit unter Druck stehendem Arbeitsfluid veranlassen, wobei zumindest die Mehrzahl der nicht geschalteten Stellglieder nicht gleichzeitig mit den geschalteten Stellgliedern mit unter Druck stehendem Arbeitsfluid beaufschlagt wird.

2. Verfahren nach Anspruch 1, **dadurch gekennzeichnet, dass** das Steuerungsmodul (4) Signale erzeugt, welche Informationen über zumindest das oder die mit Druck zu beaufschlagenden nicht geschalteten Stellglieder (2, 3) und den Zeitpunkt von deren Druckbeaufschlagung enthalten.

3. Verfahren nach wenigstens einem der vorherigen Ansprüche, **dadurch gekennzeichnet, dass** das Steuerungsmodul (4) Signale erzeugt, welche Informationen über zumindest das oder die mit Druck zu beaufschlagenden nicht geschalteten Stellglieder (2, 3) und die Zeitdauer von deren Druckbeaufschlagung enthalten.

4. Verfahren nach wenigstens einem der vorherigen Ansprüche, **dadurch gekennzeichnet, dass** das Steuerungsmodul (4) zusätzlich weitere Informationen (6) einliest und bei der Ermittlung der mit Druck zu beaufschlagenden nicht geschalteten Stellglieder (2, 3) oder dem Zeitpunkt oder der Zeitdauer von deren Druckbeaufschlagung berücksichtigt.

5. Verfahren nach Anspruch 4, **dadurch gekennzeichnet, dass** das Steuerungsmodul (4) zusätzlich eine Information über die Priorität der Bestätigung der Stellung eines Stellgliedes (2, 3) einliest und bei der Ermittlung der mit Druck zu beaufschlagenden nicht geschalteten Stellglieder oder dem Zeitpunkt oder der Zeitdauer von deren Druckbeaufschlagung berücksichtigt.

6. Verfahren nach zumindest einem der Ansprüche 4 oder 5, **dadurch gekennzeichnet, dass** das Steuerungsmodul (4) zusätzlich eine Information über die Verfügbarkeit von elektrischer Energie einliest und bei der Ermittlung der mit Druck zu beaufschlagenden nicht geschalteten Stellglieder (2, 3) oder dem Zeitpunkt oder der Zeitdauer von deren Druckbeaufschlagung berücksichtigt.

7. Verfahren nach zumindest einem der Ansprüche 4 bis 6, **dadurch gekennzeichnet, dass** das Steuerungsmodul (4) zusätzlich eine Information über die Verfügbarkeit von Druck und/oder Volumenstrom des Arbeitsfluids einliest und bei der Ermittlung der mit Druck zu beaufschlagenden nicht geschalteten Stellglieder oder dem Zeitpunkt oder der Zeitdauer von deren Druckbeaufschlagung berücksichtigt.

8. Verfahren nach zumindest einem der Ansprüche 4 bis 7, **dadurch gekennzeichnet, dass** das Steuerungsmodul (4) zusätzlich eine Information über die IST-Posftion zumindest eines Stellgliedes (2, 3) einliest und bei der Ermittlung der mit Druck zu beaufschlagenden nicht geschalteten Stellglieder oder dem Zeitpunkt oder der Zeitdauer von deren Druckbeaufschlagung berücksichtigt.

9. Verfahren nach Anspruch 8, **dadurch gekennzeichnet, dass** das Steuerungsmodul (4) beim Vorliegen einer Information über eine Abweichung zwischen einer IST-Position von einer SOLL-Position eines nicht geschalteten Stellgliedes (2, 3) einen Schaltfall auslöst.

10. Verfahren nach zumindest einem der vorhergehenden Ansprüche, **dadurch gekennzeichnet, dass** das Steuerungsmodul (4) Signale erzeugt, welche eine gepulste Druckbeaufschlagung nicht geschalteter Stellglieder (2, 3) mit unter Druck stehendem Arbeitsfluid zur Folge haben.

11. Fluidbetätigtes Steuersystem zur Durchführung des Verfahrens nach wenigstens einem der vorherigen Ansprüche, mit zumindest einer Druckmittelquelle (1) zum Beaufschlagen eines Arbeitsfluids mit einem erhöhten Druck, zumindest zwei mit Hilfe des unter erhöhtem Druck stehenden Arbeitsfluids ansteuerbaren Stellgliedern (2, 3) sowie mit einer Steuerungsvorrichtung (5) zur Ansteuerung von Ventilen (V1 bis V8) zur Steuerung und/oder Regelung des Druckes in verschiedenen Teilen des fluidbetätigten Steuersystems, **dadurch gekennzeichnet, dass** ein Steuerungsmodul (4) vorgesehen ist, das so ausgebildet ist, dass zumindest eine Information über eine vorliegende Steuerungsaktion einlesbar ist, und unter zusätzlicher Berücksichtigung von vorgegebenen Mustern und/oder Berechnungsvorschriften und/oder Modellen Signale erzeugbar sind, die eine Beaufschlagung von nicht geschalteten Stellgliedern mit unter Druck stehendem Arbeitsfluid zur Folge haben.

12. Fluidbetätigtes Steuersystem nach Anspruch 11, **dadurch gekennzeichnet, dass** das fluidbetätigte Steuersystem ein Hydrauliksystem oder ein Pneumatiksystem ist.

13. Fluidbetätigtes Steuersystem nach Anspruch 11 oder 12, **dadurch gekennzeichnet, dass** das Steuerungsmodul (4) zur Zuführung der Informationen über eine vorliegende Steuerungsaktion über eine Daten- oder Steuerungsleitung mit der Steuerungsvorrichtung (5) sowie über weitere Daten- und/oder Sensorleitungen (weitere Signale 6) mit anderen elektronischen Geräten oder Sensoren verbunden ist.

## Claims

1. Method for controlling a fluid-actuated control system, in particular for controlling a hydraulically or pneumatically controlled automatic or automated gearbox (15) for a motor vehicle, having at least one pressure medium source (1), at least two actuating elements (2, 3) to which pressurized fluid can be applied, and having a control device (5) for controlling the fluid-actuated control system, **characterized in that** an additional control module (4) is used which reads in signals about at least one current control action and generates therefrom, in accordance with a predefined pattern and/or calculation rules and/or models, signals which cause pressurized working fluid to be applied to non-switched actuating elements (2 or 3), wherein pressurized working fluid is not applied at least to the majority of the non-switched actuating elements at the same time as to the switched actuating elements.

2. Method according to Claim 1, **characterized in that** the control module (4) generates signals which contain information about at least the non-switched actuating element or elements (2, 3) to which pressure is to be applied, and about the time at which pressure is to be applied to said actuating element or elements (2, 3).

3. Method according to at least one of the preceding claims, **characterized in that** the control module (4) generates signals which contain information about at least the non-switched actuating element or elements (2, 3) to which pressure is to be applied, and about the time period over which pressure is to be applied to said actuating element or elements (2, 3).

4. Method according to at least one of the preceding claims, **characterized in that** the control module (4) additionally reads in further information (6), and takes said further information (6) into account in the determination of the non-switched actuating elements (2, 3) to which pressure is to be applied, or the time at which or the time period over which pressure is to be applied to said actuating elements (2, 3).

5. Method according to Claim 4, **characterized in that** the control module (4) additionally reads in information about the priority of the confirmation of the position of an actuating element (2, 3), and takes said priority into account in the determination of the non-switched actuating elements to which pressure is to be applied, or the time at which or the time period over which pressure is to be applied to said actuating elements (2, 3).

6. Method according to at least one of Claims 4 or 5, **characterized in that** the control module (4) additionally reads in information about the availability of electrical energy and takes said information into account in the determination of the non-switched actuating elements (2, 3) to which pressure is to be applied, or the time at which or the time period over which pressure is to be applied to said actuating elements (2, 3).

7. Method according to at least one of Claims 4 to 6, **characterized in that** the control module (4) additionally reads in information about the availability of pressure and/or volume flow of the working fluid and takes said information into account in the determination of the non-switched actuating elements to which pressure is to be applied, or the time at which or the time period over which pressure is to be applied to said actuating elements.

8. Method according to at least one of Claims 4 to 7, **characterized in that** the control module (4) additionally reads in information about the actual position of at least one actuating element (2, 3) and takes said information into account in the determination of the non-switched actuating elements to which pressure is to be applied, or the time at which or the time period over which pressure is to be applied to said actuating elements (2, 3).

9. Method according to Claim 8, **characterized in that** the control module (4) triggers a switching situation when information about a deviation between an actual position and a setpoint position of a non-switched actuating element (2, 3) is present.

10. Method according to at least one of the preceding claims, **characterized in that** the control module (4) generates signals which result in pulsed pressurized application of pressurized working fluid to non-switched actuating elements (2, 3).

11. Fluid-actuated control system for carrying out the method according to at least one of the preceding claims, having at least one pressure medium source (1) for applying a raised pressure to a working fluid, at least two actuating elements (2, 3) which can be activated using the working fluid which is under raised pressure, and having a control device (5) for activating valves (V1 to V8) for performing open-loop and/or closed-loop control of the pressure in various parts of the fluid-actuated control system, **characterized in that** a control module (4) is provided which is embodied in such a way that at least information about a current control action can be read in, and signals which result in pressurized working fluid being applied to non-switched actuating elements can be generated while additionally taking into account predefined patterns and/or calculation rules and/or models.

12. Fluid-actuated control system according to Claim 11, **characterized in that** the fluid-actuated control system is a hydraulic system or a pneumatic system.

13. Fluid-actuated control system according to Claim 11 or 12, **characterized in that** the control module (4) is connected to the control device (5) via a data line or control line in order to supply information about a current control action, and to other electronic devices or sensors via further data lines and/or sensor lines (further signals 6).

## Revendications

1. Procédé pour commander un système de commande actionné par un fluide, par exemple pour commander une boîte de vitesses (15) automatique ou automatisée à commande hydraulique ou pneumatique pour un véhicule automobile, comprenant au moins une source de fluide pressurisé (1), au moins deux actionneurs (2, 3) qui peuvent être alimentés avec le fluide sous pression ainsi qu'un dispositif de commande (5) pour commander le système de commande actionné par un fluide, **caractérisé en ce qu'**un module de commande (4) supplémentaire est utilisé, lequel lit les signaux relatifs à au moins une action de commande en cours et génère à partir de ceux-ci, conformément à des spécimens et/ou des prescriptions de calcul et/ou des modèles prédéfinis, des signaux qui provoquent l'alimentation en fluide de travail sous pression des actionneurs (2 ou 3) qui ne sont pas commutés, au moins la pluralité d'actionneurs non commutés n'étant pas alimentée en fluide de travail sous pression simultanément avec les actionneurs commutés.

2. Procédé selon la revendication 1, **caractérisé en ce que** le module de commande (4) génère des signaux qui contiennent des informations sur au moins le ou les actionneurs (2, 3) non commutés à alimenter en pression et le moment où ils seront alimentés en pression.

3. Procédé selon au moins l'une des revendications précédentes, **caractérisé en ce que** le module de commande (4) génère des signaux qui contiennent des informations sur au moins le ou les actionneurs (2, 3) non commutés à alimenter en pression et la durée pendant laquelle ils seront alimentés en pression.

4. Procédé selon au moins l'une des revendications précédentes, **caractérisé en ce que** le module de commande (4) lit en plus des informations supplémentaires (6) et en tient compte lors de la détermination des actionneurs (2, 3) non commutés à alimenter en pression ou encore du moment ou de la durée de leur alimentation en pression.

5. Procédé selon la revendication 4, **caractérisé en ce que** le module de commande (4) lit en plus une information relative à la priorité de confirmation de la position d'un actionneur (2, 3) et en tient compte lors de la détermination des actionneurs non commutés à alimenter en pression ou encore du moment ou de la durée de leur alimentation en pression.

6. Procédé selon au moins l'une des revendications 4 ou 5, **caractérisé en ce que** le module de commande (4) lit en plus une information relative à la disponibilité de l'énergie électrique et en tient compte lors de la détermination des actionneurs (2, 3) non commutés à alimenter en pression ou encore du moment ou de la durée de leur alimentation en pression.

7. Procédé selon au moins l'une des revendications 4 à 6, **caractérisé en ce que** le module de commande (4) lit en plus une information relative à la disponibilité de la pression et/ou du débit volumique du fluide de travail et en tient compte lors de la détermination des actionneurs non commutés à alimenter en pression ou encore du moment ou de la durée de leur alimentation en pression.

8. Procédé selon au moins l'une des revendications 4 à 7, **caractérisé en ce que** le module de commande (4) lit en plus une information relative à la position réelle d'au moins un actionneur (2, 3) et en tient compte lors de la détermination des actionneurs non commutés à alimenter en pression ou encore du moment ou de la durée de leur alimentation en pression.

9. Procédé selon la revendication 8, **caractérisé en ce que** le module de commande (4), en présence d'une information relative à un écart entre une position réelle et une position de consigne d'un actionneur (2, 3) non commuté, déclenche une opération de commutation.

10. Procédé selon au moins l'une des revendications précédentes, **caractérisé en ce que** le module de commande (4) génère des signaux qui ont pour conséquence une alimentation pulsée en pression avec du fluide de travail sous pression des actionneurs (2, 3) non commutés.

11. Système de commande actionné par un fluide destiné à mettre en oeuvre le procédé selon au moins l'une des revendications précédentes, comprenant au moins une source de fluide pressurisé (1) pour délivrer un fluide de travail sous une pression accrue, au moins deux actionneurs (2, 3) qui peuvent être commandés à l'aide du fluide de travail sous pression accrue ainsi qu'un dispositif de commande (5) destiné à commander des vannes (V1 à V8) pour commander et/ou réguler la pression dans les différentes parties du système de commande actionné par un fluide, **caractérisé en ce qu'**il est prévu un module de commande (4) qui est configuré de telle sorte qu'il est possible de lire au moins une information sur une action de commande en cours et qu'il est possible de générer, en tenant en plus compte de spécimens et/ou de prescriptions de calcul et/ou de modèles prédéfinis, des signaux qui ont pour conséquence l'alimentation en fluide de travail sous pression des actionneurs qui ne sont pas commutés.

12. Système de commande actionné par un fluide selon la revendication 11, **caractérisé en ce que** le système de commande actionné par un fluide est un système hydraulique ou un système pneumatique.

13. Système de commande actionné par un fluide selon la revendication 11 ou 12, **caractérisé en ce que** le module de commande (4), pour acheminer les informations relatives à une action de commande en cours, est relié par le biais d'une ligne de données ou de commande avec le dispositif de commande (5) et aussi avec d'autres appareils électroniques ou capteurs par le biais d'autres lignes de données et/ou de commande (signaux supplémentaires 6).
